# EUROPEAN PATENT SPECIFICATION

(11) **EP 1 180 627 B1**
(45) Date of publication and mention of the grant of the patent: **04.02.2004**
(21) Application number: 99913585.8
(22) Date of filing: 08.04.1999
(51) Int. Cl.: F16K 47/02, F16K 47/08

(54) **HIGH DIFFERENTIAL PRESSURE REGULATING VALVE**
SPERRVENTIL FÜR HOHE DIFFERENZDRUCKE
SOUPAPE REGULATRICE A HAUTE PRESSION DIFFERENTIELLE

(43) Date of publication of application: 20.02.2002
(73) Proprietor: Koso Kabushikikaisha, Minato-ku, Tokyo 105-0003 (JP)
(72) Inventor: IKEGAYA, Takasi, Tokyo 156-0057 (JP); MURANAKA, Yoshio, Toda-shi, Saitama 335-0015 (JP); MOROOKA, Hiroyuki, Sukagawa-shi, Fukusima 962-0043 (JP)
(74) Representative: Patentanwälte Leinweber & Zimmermann
(86) International application number: PCT/JP1999/001869
(87) International publication number: WO 2000/061975

(56) References cited:
- DE-A- 2 947 550
- JP-A- 10 153 275
- JP-A- 50 091 039
- JP-A- 50 119 330
- JP-A- 51 128 030
- JP-A- 55 065 788
- JP-B1- 48 025 333
- US-A- 3 780 767

## Description

### TECHNICAL FIELD

This invention relates to a high-differential-pressure valve having a valve plug sliding in a cage to regulate quantity of fluid flowing through the valve by adjusting the opening ratio of the numerous through holes which are opened in the cage, especially to a high-differential-pressure valve making reduced noise and cavitation.

### BACKGROUND ARTS

In the valves whose valve plug slides in a cage to regulate volume of fluid, the fluid looses pressure during flowing through the numerous through holes having a small diameter opened in the cage.

When high pressure fluid flows through the valve, the throttle portion generates high differential pressure which causes cavitation by the fluid. The cavitation produces erosion around the throttle portions resulting in short life of the valve, as well as high level of noise and vibration.

A type of high-differential-pressure valve applied to high pressure fluid is known to solve the above problem. This type of valve has several cylindrical bodies having numerous small holes piled in layers in the cage, and chambers between the layers for recovering fluid pressure. The fluid flows through the valve alternating expansion and compression several times, then the fluid reduces pressure gradually in the multiple stages so as to eliminate rapid depressurization and to generate low level of noise.

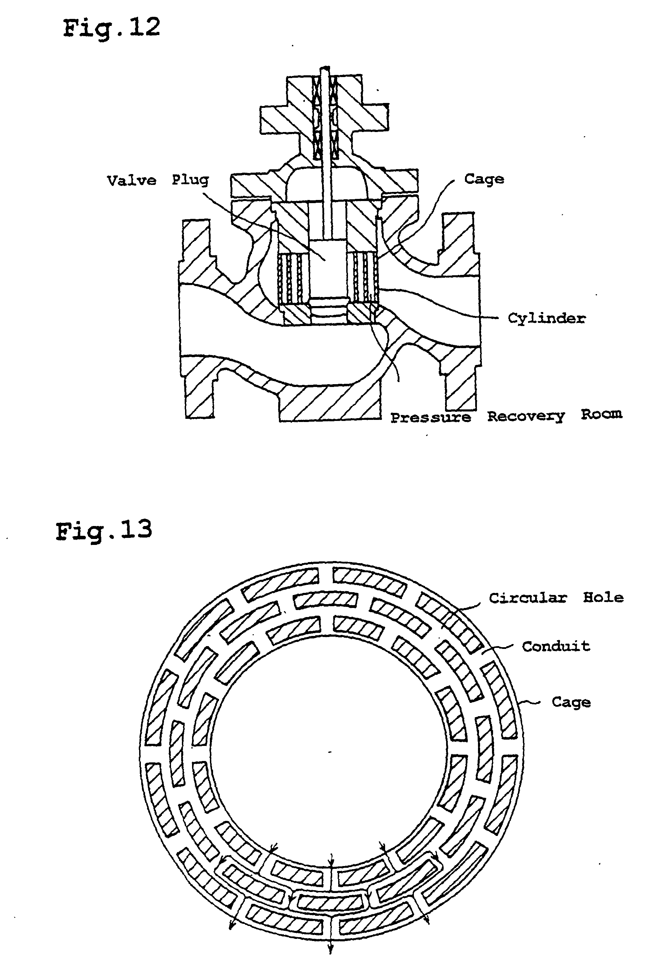

For example, JPA09-060763 discloses a compact control valve eliminating noise by more than one cylindrical body made of punched metal plate being placed in concentric arrangement, as shown in fig.12. The flowing fluid is throttled by a through hole of the punched metal plate and then recovers its pressure and expands in a pressure recovering room so that the fluid decreases pressure by a small step. The depressurized fluid is throttled at a through hole of the outer cylinder and then expands in the next pressure recovering room again. The disclosed valve is expected to relax shock waves and to reduce noise by the above-mentioned gradual depressurization.

And another type of valve is known for use in low-noise high-differential-pressure service, which has through holes opened in the same level and connected with each other via annular chambers located in the same level. In this type of valve, the fluid passages of the flowing fluid turn every corner in right angle so that the energy of the fluid is absorbed smoothly. Fig.13 shows a horizontal sectioned view of the fluid passages in the cage of the above-mentioned valve. Numerous annular chambers are piled up in axial direction, and numerous through holes are connected in radial direction to each annular chamber with alternate joins, so that the fluid passages separate and join at every corner and turn in right angle. Therefore, the fluid energy is effectively absorbed.

A valve according to the preamble of claim 1 is disclosed in document US A 3 780 767.

These types of high-differential-pressure valve may not have so many corners in fluid passages for an extremely high pressure fluid to control velocity as to absorb enough energy and to reduce noise and cavitation efficiently.

Expansion ratio at the fluid flowing through the small through holes cannot be precisely estimated and controlled because the fluid flows into a pressure recovering chamber through more than one the fluid passage.

It is preferred to provide fluid passages having much more turns in the cage for high pressure fluid service valves. But such valves has not been commercially produced because of difficulty in the production. Especially in gas or vapor use, a proper ratio of volume expansion is required in the sequential depressurization processes to reduce noise effectively.

Accordingly, it is an object of this invention to provide a larger number of turns in fluid passages, or fluid conduits through a cage so that energy of high pressure fluid is effectively absorbed to generate low level of noise and cavitation in high-differential-pressure valves which regulate quantity of fluid by closing or opening aperture of the fluid conduits located in the cage with sliding movement of the plug in the cage.

### SUMMARY OF THE INVENTION

A high-differential-pressure valve of the invention is a valve as disclosed in claim 1.

According to the invention, a valve which has an adequate pressure drop during the fluid goes through the conduits can be easily designed and produced, because the fluid passages in the conduits are separated from each other without any cross with other fluid passages and furthermore the fluid passages can be obtained with any number of bends on the concentric surface planes formed in the cage.

The cage can be made of at least two circular cylinders which are contact and adhered with each other in radial direction, and each of the circular cylinders are formed with winding grooves on a surface of the side which contacts with another circular cylinder. One straight hole penetrating the circular cylinder is formed at the first end of the winding groove, and a straight hole of the another circular cylinder corresponds to the other end of the winding groove, so that the fluid passage continues thoroughly from the outer surface to the inner surface of the cage.

According to the above structure, the winding grooves are easily formed in any shape because the winding grooves are ditched on the surface of the circular cylinders. In the case that the cage is piled with many circular cylinders, a precise cage can be made up by shrinkage fit or brazing after easy alignment of the circular cylinders. Thus high quality of the high-differential-pressure valves can be economically obtained.

Furthermore, the winding grooves formed on the surface of the circular cylinders preferably have square shaped cross sections, and the winding grooves are preferably made on the outer surfaces of the circular cylinders. Such winding grooves can be easily formed by cutting with, for example, a milling machine, as well as by casting.

The separated fluid passage or conduit may expand its cross-sectional area in the flowing direction with a constant ratio at every turn of the passage or conduit. A high-differential-pressure valve having the above-mentioned passages or conduits may be preferred to a control valve in vapor or gas use. Gaseous body expands its volume with the pressure decreasing, therefore if the fluid conduit in the valve increases its cross section in proportion to the expansion of the gaseous body, noise and vibration can be restrained in the valve because there are rarely occurred extremely high differential pressures even in local places in the flow.

The relationship between a stroke of the valve plug and an area of aperture of the fluid conduit being opened according to the movement of the valve plug may correspond to a function relating to its valve characteristics, particularly the area of aperture of the fluid conduit may be proportional to the valve plug stroke.

The total aperture area of the fluid conduits decides the quantity of the fluid flowing through the valve. In the high-differential-pressure valve of the invention, the aperture area of the fluid conduits which are released according to movement of the valve plug can be easily designed to fit an arbitrary function corresponding to location and openings of the numeral conduits. Thus in the case that the valve is used for a control valve an optimum characteristics may be freely obtained for an individual control purpose, as well as equal-percent characteristics or linear characteristics which are commonly used in control valves.

### BRIEF DESCRIPTION OF DRAWINGS

Fig.1 is a cross sectional view of a high-differential-pressure valve in accordance with to teaching of the invention;
Fig.2 is a perspective view of a cage used in the valve;
Fig.3 is a perspective view of a circular cylinder used in the cage;
Fig.4 is a perspective view of a portion of winding groove ditched on the surface of the circular cylinder;
Fig.5 is a perspective view of an example of passage in the fluid conduit;
Fig.6 is a perspective view of another example of passage of the fluid conduit;
Fig.7 is a elevation view showing a part of outer surface of the cage used in the embodiment of the invention;
Fig.8 is a cross sectional view showing A-A section shown in Fig.7;
Fig.9 is a cross sectional view showing B-B section shown in Fig.7;
Fig.10 is a drawing illustrating a several exemplified shapes of winding grooves formed on the surface of circular cylinder;
Fig.11 is a drawing illustrating the relationship of the aperture area of the fluid conduits to the valve plug stroke;
Fig.12 is a cross sectional view of a high-differential-pressure valve of a prior art; and
Fig.13 is a horizontal cross section showing a cage of the high-differential-pressure valve of the prior art.

### BEST MODE FOR CARRYING OUT THE INVENTION

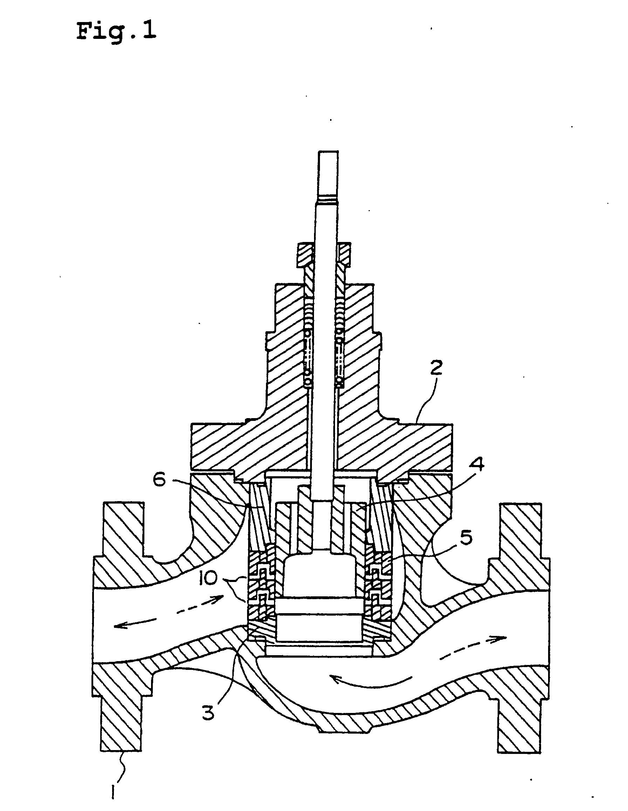

A high-differential-pressure valve of the invention shown in Fig.1 is formed essentially with a valve body 1, a bonnet 2, a valve seat 3, a valve plug 4, a cage 5 and a cage retainer 6. The valve is assembled by setting the valve seat 3 in the valve body 1, inserting the cage 5 and fixing it by the cage retainer 6, then inserting the valve plug 4 and covering them by the bonnet 2, and fixing a stem of the valve plug by springs, packing and the like, so that high pressure fluid inside the valve may not leak while the valve plug 4 moves.

The cage 5 has numerous through holes 10. high pressure fluid flows from inside to outside or from outside to inside of the cage 5 through the through holes 10 which are opened by the valve plug 4. The flow rate of the high pressure fluid can be regulated because the total aperture area of the through holes 10 of the cage 5 is varied according to lift of the valve plug 4 sliding in the cage 5.

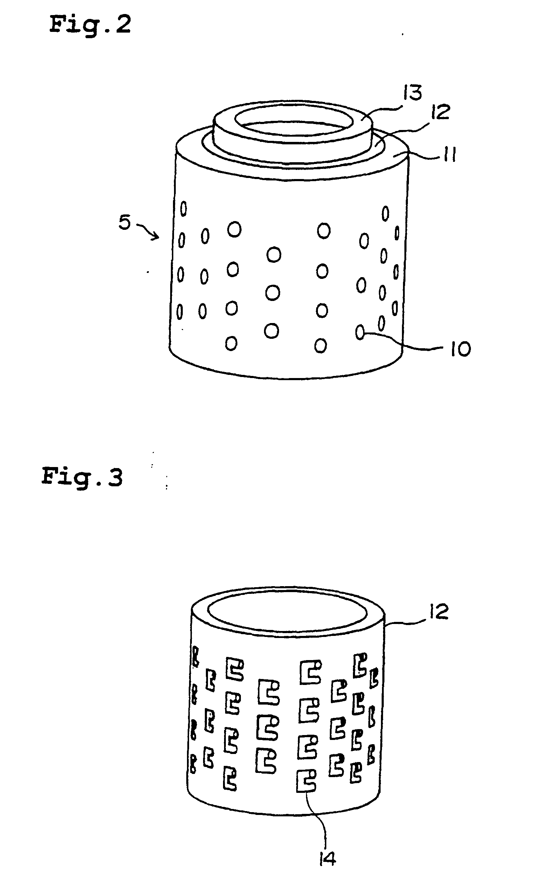

Fig.2 is a perspective view of the cage 5. The through holes 10 are located in multiple steps in a vertical direction and at equal intervals in a horizontal direction around the periphery of the cage 5. The other ends of the through holes are opened at nearly the same height of the openings to the inside surface of the cage 5. The cage 5 of this embodiment is formed with a tier of three circular cylinders 11, 12 and 13 fixed by soldering each other. The innermost circular cylinder 13 is extruded to fasten a packing stuff together with the recess formed in an edge of the cage retainer 6, so that the fluid may not leak along the periphery of the valve plug 4.

Fig.3 is a perspective view of the circular cylinder 12 which is the middle layer of the cage 5. Winding grooves 14 are formed on the surface of the circular cylinder 12, and are located at the places corresponding to the straight holes of the circular cylinder 11 which is the outermost layer of the cage.

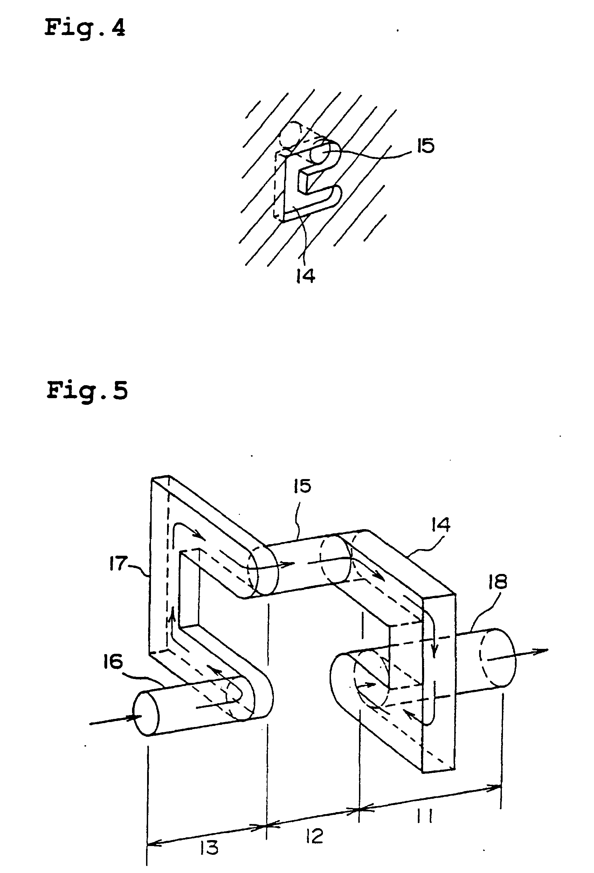

Fig.4 is a perspective view of an enlargement of the above-mentioned groove portion. The winding groove 14 is ditched on the surface of the circular cylinder 12 forming a C-shape. The winding groove 14 can be much easily formed on an outer surface of the circular cylinder 11, comparing to be formed on the inner surface.

The grooves shown in the drawing have square shaped cross sections so that they may be easily formed as winding grooves, though they may be designed to have circular sections or any other shapes.

A straight hole 15 penetrating through the circular cylinder 12 is formed at one end of the winding groove 14. The other end of the winding groove 14 corresponds to a straight hole formed in the outer circular cylinder.

On the outer surface of the innermost circular cylinder 13, there formed a winding groove and a straight hole similar to ones shown in Fig.4. A passage goes from the straight hole 15 formed in the circular cylinder 12 of the middle layer, through the winding groove and the straight hole of the innermost cylinder, and out to the inside space of the cage 5. The opening of the straight hole formed on the innermost circular cylinder 13 is located at the same level of the opening of the straight hole made in the outermost circular cylinder 11. Such a symmetrical arrangement enables to eliminate excessive efforts in its design and production.

Fig.5 is a perspective view three-dimensionally showing only the passage of a through hole 10 running from the innermost circular cylinder 13 to the outermost circular cylinder 11.

The fluid flows from the inside to the outside of the cage, as shown by arrows in the drawing. The fluid poured into the straight hole 16 of the innermost circular cylinder 13 bumps against and turns along the inner wall of the middle circular cylinder 12. The fluid runs in the winding groove 17 which is ditched on the surface of the innermost circular cylinder 13 and turns twice in the winding groove. Then, the fluid flows through the straight hole 15 of the middle circular cylinder 12, dumps against the wall of the outer circular cylinder 11, and runs along the winding groove 14 formed on the surface of the circular cylinder 12. And finally, the fluid drains out from the cage through the straight hole 18 of the outermost circular cylinder 11.

The straight holes and the winding grooves are connected at nearly right angles to each other, and every bend of the winding grooves is formed in a right angle, so that the passage traversing the cage 4 turns at about a right angle when it changes the direction.

Therefore, the high pressure fluid looses its energy and decreases its pressure at every corners during it flows through the through hole 10, so as to reduce shock waves, noise, vibration, cavitation, and so on.

The through hole 10 may be formed to gradually expand its cross-sectional area in the flowing direction.

Valves for gaseous fluid as gas and vapor, in particular, can reduce its pressure more smoothly by increasing its cross section at every corners with a corresponding ratio to the volume expansion at every bumps to the wall, and thus they can reduce noise and vibration more effectively.

The cross section is defined by radius of the straight holes and width and depth of the grooves. Such a constant expansion ratio of the cross section at every bump in the passage is more convenient for design and production.

The optimum form of the winding grooves and the optimum expansion ratio of the cross section may be selected.

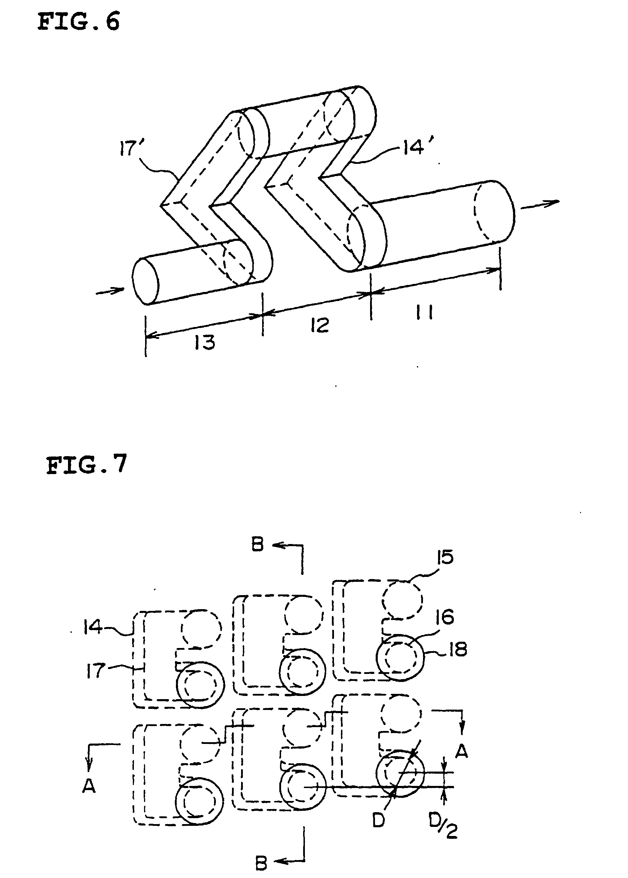

Fig.6 is a perspective view showing another example of the through hole.

This example has winding grooves 14' and 17' each having only one bend which are formed on the surface of the middle circular cylinder 12 and the innermost circular cylinder 13, respectively. The through hole of this example has only six bends while the through hole shown in Fig.5 has eight bends. This type of through hole may be enough to obtain rather small differential pressure.

Two of the winding grooves 14' and 17' in Fig.6 are symmetrically arranged in a radial direction. Such arrangement provides easy design and production because similar grooves and holes may be made in similar directions and at similar locations in both of the middle circular cylinder and the inner circular cylinder.

Fig.7 is a vertical view showing an example arrangement of several through holes on the outer surface of the cage 4. This example illustrates a type of through holes having a constant expansion ratio of cross section from their inflow ports to their outflow ports, which are made by aligning c-shaped grooves as shown in Fig.5 formed in the middle and inner circular cylinders. The reference numbers are the same used in Fig.5, for simplification.

The fluid flows in from the straight hole 16, turns twice in winding groove 17, runs through the straight hole 15 and the winding groove 14, and finally flows out from the straight hole 18.

The cross section of the passage increases in a constant ratio at every turns.

The straight holes are allocated in the periphery of the cage having equal angles a each other, so that unequally distributed flows may not easily occur in the valve.

The center of the straight hole 16 differs in height from every adjacent straight holes by a half of diameter D/2 as D means the diameter of the straight hole. The height difference makes the flow change continuously at flow control by means of changing the total open aperture of the straight holes by lifting the valve plug in the cage.

Though, in the above example, a continuous flow characteristic is obtained by an arrangement of shifting the circular apertures by its radius in a vertical direction, it may obviously be obtained by their overlapping gaps having an arbitrary distance.

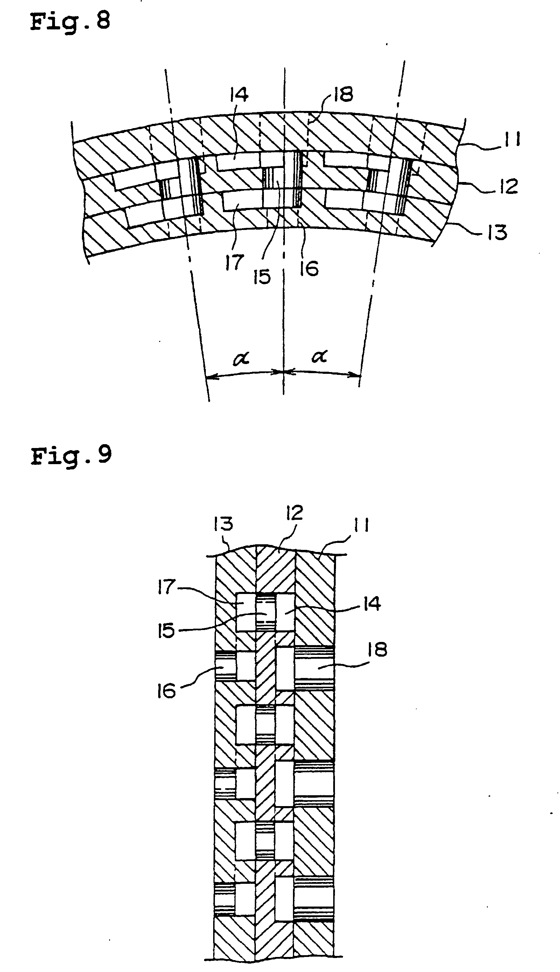

Fig.8 is a drawing showing a cross section cut by A-A plane in Fig.7, and Fig.9 shows a cross section cut by B-B plane in Fig.7.

The straight holes 18 are bored in the outermost circular cylinder 11, the winding grooves 14 and the straight holes 15 are formed in the middle circular cylinder 12, and the winding grooves 17 and the straight holes 16 are formed in the innermost circular cylinder 13. The cage 5 is assembled with these three circular cylinders 11, 12 and 13 by being tightly connected into one body with proper allocations of the straight holes and the winding grooves, so as to form separated through holes which inhibit from leaking fluid to other through holes.

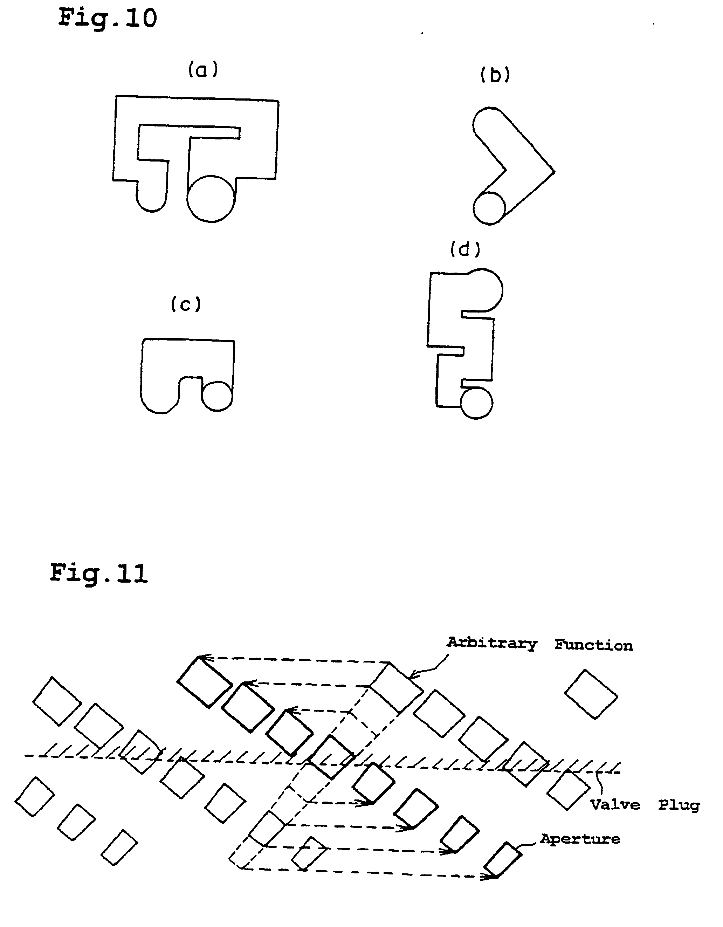

Fig.10 shows several pattern examples of the winding grooves. The shape of the winding groove may be optionally selected according to a condition of the object of the high-differential-pressure valve from the simplest shape of a straight line connecting two of the through holes to a rather complex shape having a lot of bends between the inflow port and the outflow port.

And the bending corners may have obtuse angles or acute angles, or arbitrary curvatures, as well as right angles. In general, the sharper the bending angle is, the less the number of bends is.

Cross sections of the winding grooves and the straight holes are not limited to be square or circular. Arbitrary shapes may be selected according to the machine tools or the casting condition.

When a high-differential-pressure valve is applied for a control service, the valve is preferably selected with a flow characteristic corresponding to its utility conditions from many optional flow characteristics. A high-differential-pressure valve of prior arts has straight holes straightly connected to inner annular chambers. Height of the apertures of the straight holes is restricted to the height of the annular chambers, so that the flow characteristic shall have a discrete function. Therefore, the high-differential-pressure valves of the prior arts cannot provide precise control actions.

The high-differential-pressure valves of this invention may have any optional flow characteristic to lift of the valve plug, because the through holes are separated from each other and their apertures may be arranged at optional places in the surface facing the valve plug.

Fig.11 illustrates one example of designing method for the flow characteristic of the valve.

At first, an arbitrary figure indicating change of the aperture area is drawn in an expansion plan of the surface plane of the cage contacting with the valve plug. For example, broken lines in Fig.11 show a function such that the aperture gradually increases upwardly. The figure is divided into several sections by arbitrary lines, and the sections are moved and distributed at certain intervals in horizontal direction as indicated by bold lines in Fig.11. The same procedures are repeated at regular intervals around the periphery of the cage as indicated by thin lines in Fig.11.

An optional flow characteristic which has a continuous function of flow versus lift of the valve plug indicated by a dotted line in Fig.11 can be obtained by forming apertures of the through holes according to the above-mentioned plot plan.

The shape of the aperture is not limited to trapezoidal as shown in Fig.11, but it may be square or circular as long as it may reproduce position and area in the function.

Commonly used flow characteristics include an equal percent characteristic, a square root characteristic, a hyperbolic characteristic, a quick open characteristic, and so on. Above all, a linear characteristic is the most popular because of its flexibility.

A linear characteristic is obtained by the above-mentioned method relating to Fig.7, and it may also be obtained by the method of Fig.11 in which a figure having equal area in a vertical direction is drawn on the plan and divided, and distributed in the horizontal direction.

Though the cage is formed from three circular cylinders in the above-mentioned example, it is obvious two or four or more circular cylinders may be used according to the fluid condition.

According to the invention, the number of turns in the fluid passage can be adjusted either by the number of bends in the winding grooves or by the number of layers of the circular cylinders.

The circular cylinders may be adhered to each other by a commonly used method like a shrinkage fit method.

### INDUSTRIAL APPLICABILITY

As described above, the high-differential-pressure valve of the invention may be economically applied to high pressure fluid service with a long life which effectively absorbs energy from the high pressure fluid and reduces noise and cavitation, because the winding grooves are formed on the inside surfaces of the circular cylinders in the wall of the cage which is formed with more than one circular cylinder adhered to each other, and thus each one of separated passages formed from a lot of through holes made in the cage has numerous turns.

## Claims

1. A high-differential-pressure valve for regulating quantity of fluid flowing from a fluid inlet to a fluid outlet, comprising :
said fluid inlet and said fluid outlet;
a valve plug container equipped with a cage (5); and
a valve plug (4) moving up and down sliding in the cage,
said cage (5) having more than one through hole (10), and said valve plug closing or opening said through holes by moving up or down in the cage for regulating fluid flow,
wherein each of said through holes (10) forms a separated conduit piercing through the wall of the cage, said separated conduit having one or more bending passage portions located between the inner surface and the outer surface of the cage,
**characterized by** that each of said bending passage portions is formed in a concentric plane (11, 12, 13) which is parallel to the surface of the cage (5), and has at least one bend between an inlet and an outlet of said parallel plane (11, 12, 13) concerned.

2. The high-differential-pressure valve claimed in claim 1 wherein said cage is made of at least two circular cylinders which are in contact and adhered with each other in radial direction, said circular cylinder having more than one straight hole and being formed on a surface contacting with another circular cylinder with winding grooves, each of said winding grooves running from one of said straight holes to another end and having at least one bend between said straight hole and said another end, and a straight hole of said another circular cylinder being arranged to face to said another end of said groove so that each of said separated conduits individually penetrates said cage from the outer surface to the inner surface continuously.

3. The high-differential-pressure valve claimed in claim 2 wherein said winding groove has a square shaped section and is formed on the outer surface of said circular cylinders.

4. The high-differential-pressure valve claimed in anyone of claims 1 through 3 wherein said separated conduit expands its cross-sectional area in the flowing direction with a constant ratio at every turn of the separated conduit.

5. The high-differential-pressure valve claimed in anyone of claims 1 through 4 wherein relationship between a stroke of said valve plug and an area of aperture of said separated conduit being opened according to movement of said valve plug corresponds to a function relating to a valve characteristics.

6. The high-differential-pressure valve claimed in claim 5 wherein said relationship of said stroke to said area of aperture is a linear relation.

## Patentansprüche

1. Ventil für hohen Differenzdruck zur Regulierung einer Fluidmenge, die aus einem Fluideinlass zum einem Fluidauslass fließt, aufweisend:
den Fluideinlass und den Fluidauslass;
einen Fluidstopfen-Behälter, der mit einem Käfig (5) ausgerüstet ist; und
einen Ventilstopfen (4), der sich im Käfig gleitend nach oben und unten bewegt,
wobei der Käfig (5) mehr als ein Durchgangsloch (10) aufweist, und der Ventilstopfen die Durchgangslöcher schließt oder öffnet, dadurch, dass er sich zur Fluidstromregulierung im Käfig nach oben oder unten bewegt,
und wobei jedes der Durchgangslöcher (10) einen separaten, die Wand des Käfigs durchbrechenden Kanal bildet, und der separate Kanal einen oder mehrere zwischen der Innenfläche und der Außenfläche des Käfigs befindliche Biegungspassagenabschnitte aufweist,
**dadurch gekennzeichnet, dass** jeder der Biegungspassagenabschnitte in einer konzentrischen Ebene (11, 12, 13), die parallel zur Oberfläche des Käfigs (5) ist, ausgebildet ist und mindestens eine Biegung zwischen einem Einlass und einem Auslass der betreffenden parallelen Ebene (11, 12, 13) aufweist.

2. Ventil für hohen Differenzdruck nach Anspruch 1, bei welchem der Käfig aus mindestens zwei kreisförmigen Zylindern besteht, die miteinander in radialer Richtung in Kontakt sind und aneinander haften, wobei der kreisförmige Zylinder mehr als ein geradliniges Loch aufweist und auf einer Oberfläche ausgebildet ist, die mit einem weiteren kreisförmigen Zylinder mit gewundenen Nuten in Kontakt ist, und jede der gewundenen Nuten von einem der geradlinigen Löcher zu einem anderen Ende verläuft und mindestens eine Biegung zwischen dem geradlinigen Loch und dem anderen Ende aufweist, und ein geradliniges Loch des weiteren kreisförmigen Zylinders so angeordnet ist, dass es dem anderen Ende der Nut zugewandt ist, so dass jeder der separaten Kanäle den Käfig von der Außenfläche zur Innenfläche in kontinuierlicher und unabhängiger Weise durchdringt.

3. Ventil für hohen Differenzdruck nach Anspruch 2, bei welchem die gewundene Nut einen rechteckigen Querschnitt aufweist und auf der Außenfläche der kreisförmigen Zylinder ausgebildet ist.

4. Ventil für hohen Differenzdruck nach einem der Ansprüche 1 bis 3, bei welchem sich die Querschnittsfläche des separaten Kanals in Fließrichtung mit einem konstanten Verhältnis bei jeder Biegung des separaten Kanals erweitert.

5. Ventil für hohen Differenzdruck nach einem der Ansprüche 1 bis 4, bei welchem eine Beziehung zwischen einem Hub des Ventilstopfens und einer gemäß einer Bewegung des Ventilstopfens geöffneten Aperturfläche des separaten Kanals einer in Bezug zu einer Ventilcharakteristik stehenden Funktion entspricht.

6. Ventil für hohen Differenzdruck nach Anspruch 5, bei welchem das Verhältnis des Hubs zur Aperturfläche eine lineare Beziehung ist.

## Revendications

1. Soupape à haute pression différentielle pour régler la quantité du fluide s'écoulant d'une entrée de fluide à une sortie de fluide, comprenant :
ladite entrée de fluide et ladite sortie de fluide ;
un récipient de bouchon de soupape équipé d'une cage (5), et
un bouchon de soupape (4) se déplaçant vers le haut et vers le bas d'une manière coulissante dans la cage,
ladite cage (5) ayant plus d'un trou traversant (10), et ledit bouchon de soupape fermant ou ouvrant lesdits trous traversants en se déplaçant vers le haut ou vers le bas dans la cage pour régler l'écoulement du fluide,
où chacun desdits trous traversants (10) forme un conduit séparé perçé à travers la paroi de la cage, ledit conduit séparé présentant une ou plusieurs portions de passage pliées situées entre la surface interne et la surface externe de la cage, **caractérisé en ce que** chacune desdites portions de passage de pliage est réalisée dans un plan concentrique (11, 12, 13) qui est parallèle à la surface de la cage (5) et présente au moins un pliage entre une entrée et une sortie dudit plan parallèle (11, 12, 13) concerné.

2. Soupape à haute pression différentielle selon la revendication 1, où ladite cage est réalisée en au moins deux cylindres circulaires qui sont en contact et qui adhèrent l'un à l'autre dans la direction radiale, ledit cylindre circulaire possédant plus d'un trou rectiligne et présentant sur une surface en contact avec un autre cylindre circulaire des rainures d'enroulement, chacune desdites rainures d'enroulement s'étendant à partir d'un desdits trous rectilignes à une autre extrémité et présentant au moins un pliage entre ledit trou rectiligne et ladite autre extrémité, et un trou rectiligne dudit autre cylindre circulaire étant agencé pour être orienté vers ladite autre extrémité de ladite rainure de telle sorte que chacun desdits conduits séparés pénètre individuellement dans ladite cage de la surface externe à la surface interne continuellement.

3. Soupape à haute pression différentielle selon la revendication 2, où ladite rainure d'enroulement présente une section de forme carrée et est réalisée sur la surface externe desdits cylindres circulaires.

4. Soupape à haute pression différentielle selon l'une des revendications 1 à 3, où ledit conduit séparé expanse sa zone en section transversale dans la direction d'écoulement selon un rapport constant à chaque tour du conduit séparé.

5. Soupape à haute pression différentielle selon l'une des revendications 1 à 4, où la relation entre une course dudit bouchon de soupape et une zone d'ouverture dudit conduit séparé ouverte selon un déplacement dudit bouchon de soupape correspond à une fonction se rapportant à une caractéristique de soupape.

6. Soupape à haute pression différentielle selon la revendication 5, où ladite relation de ladite course à ladite zone d'ouverture est une relation linéaire.
